# FASCICULE DE BREVET EUROPEEN

(11) **EP 1 939 753 B1**
(45) Date de publication et mention de la délivrance du brevet: **05.10.2016**
(21) Numéro de dépôt: 07123539.4
(22) Date de dépôt: 19.12.2007
(51) Int. Cl.: G06F 12/14, G06F 21/52, G06F 21/60, G06F 21/62, G06F 21/79

(54) **Protection de zones mémoire**
Schutz von Speicherbereichen
Protection of memory zones

(30) Priorité: 20.12.2006 FR 0655692
(43) Date de publication de la demande: 02.07.2008
(73) Titulaire: STMICROELECTRONICS S.A., 92120 Montrouge (FR)
(72) Inventeur: Martinez, Albert, 13320, Bouc Bel Air (FR); Orlando, William, 13790, Peynier (FR)
(74) Mandataire: Thibon, Laurent

(56) Documents cités:
- EP-A- 1 132 801
- US-A- 5 848 435
- US-A1- 2001 015 919

## Description

### Domaine de l'invention

La présente invention concerne le domaine des micro-processeurs et, plus particulièrement, des droits d'accès à des zones mémoire selon les applications (programmes) exécutées par une unité centrale de traitement.

### Exposé de l'art antérieur

La demande de brevet US-A-2005/0028004 décrit un dispositif de contrôle d'accès à une mémoire par une unité centrale exécutant différentes applications. Le dispositif détecte si l'unité centrale est pilotée par le système d'exploitation (mode OS) ou exécute une autre application. Dans ce dernier cas, un circuit, intercalé sur le bus d'instructions, vérifie que les instructions transmises à l'unité centrale sur ce bus proviennent d'une zone mémoire référencée dans une table lors du chargement de cette application.

Le document US-A-2001/0015919 décrit un système de configuration sécurisée d'un FPGA et prévoit de transférer un programme convenu dans une mémoire externe vers une mémoire associée à une unité d'exécution du FPGA.

Le document US-A-5848435 décrit un circuit de protection d'adresse comportant deux modes de fonctionnement.

### Résumé de l'invention

La présente invention vise à pallier tout ou partie des inconvénients des systèmes connus de gestion des droits d'accès à une mémoire par une unité centrale exécutant des programmes différents.

Selon un premier aspect, l'invention vise plus particulièrement à empêcher à des applications non autorisées d'accéder à des zones mémoire réservées à d'autres applications.

Selon ce premier aspect, l'invention vise également une solution transparente pour le système d'exploitation, c'est-à-dire venant à la place ou en complément des mécanismes de contrôle du système d'exploitation.

Selon un deuxième aspect, l'invention vise plus particulièrement le chargement d'applications sécurisées dans une ) mémoire d'exécution d'une unité de traitement.

Selon ce deuxième aspect, l'invention vise également une solution combinable avec le premier aspect.

Pour atteindre tout ou partie de ces objets ainsi que d'autres, la présente invention prévoit un procédé de chargement d'un programme, contenu dans au moins une première mémoire, dans une deuxième mémoire accessible par une unité d'exécution, dans lequel :
le programme est sous une forme chiffrée dans la première mémoire ;
) un circuit de contrôle d'accès à ladite deuxième mémoire est configuré à partir d'informations d'initialisation du programme, des instructions du programme et au moins des données d'initialisation étant déchiffrées pour être transférées dans ladite deuxième mémoire après configuration dudit circuit.

Selon un mode de mise en oeuvre de la présente invention, le programme chiffré contenu dans la première mémoire a été transféré dans cette mémoire depuis une troisième mémoire.

Selon un mode de mise en oeuvre de la présente invention, les première et deuxième mémoires sont une même mémoire ) volatile.

Selon un mode de mise en oeuvre de la présente invention, l'unité d'exécution comporte au moins deux modes de fonctionnement, le chargement étant effectué par un premier mode, une première exécution dans ce premier mode faisant appel à un deuxième mode.

Selon un mode de mise en oeuvre de la présente invention, l'unité d'exécution comporte au moins deux modes de fonctionnement, le chargement et l'exécution étant effectués par un premier mode.

L'invention prévoit également un procédé de protection d'un programme, chargé pour exécution, dans lequel le circuit de contrôle d'accès surveille un bus d'adresses et vérifie que l'adresse présente sur le bus est comprise dans une plage d'adresses.

L'invention prévoit également un procédé de protection d'un programme, dans lequel le circuit de contrôle d'accès surveille un bus d'adresses et n'autorise l'accès à la deuxième mémoire que si l'unité d'exécution est placée dans un mode de fonctionnement parmi plusieurs modes.

L'invention prévoit également un système informatique.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 est un schéma-bloc d'un système équipé d'un circuit de contrôle des accès à des zones mémoire selon un mode de réalisation de la présente invention ;
la figure 2 est un schéma fonctionnel d'un circuit de contrôle selon un mode de réalisation du premier aspect de la présente invention ;
la figure 3 est un schéma-bloc fonctionnel plus détaillé d'un circuit de contrôle selon un mode de réalisation de la présente invention ;
la figure 4 est un exemple de circuit logique de décision d'un circuit de contrôle selon un mode de réalisation de la présente invention ;
la figure 5 est un autre exemple de circuit logique d'un circuit de contrôle selon un mode de réalisation de la présente invention ;
la figure 6 illustre schématiquement un exemple de traitement d'un programme selon un mode de mise en oeuvre du deuxième aspect de l'invention ;
les figures 7A et 7B illustrent schématiquement le chargement d'un programme dans une mémoire d'exécution selon le mode de mise en oeuvre de la figure 6 ;
la figure 8 illustre schématiquement un exemple de traitement d'un programme selon un autre mode de mise en oeuvre du deuxième aspect de l'invention ;
la figure 9 illustre schématiquement le chargement d'un programme dans une mémoire d'exécution selon le mode de mise en oeuvre de la figure 8 ; et
la figure 10 représente un exemple de circuit de contrôle d'accès selon le mode de mise en oeuvre des figures 8 et 9.

### Description détaillée

De mêmes éléments ont été désignés par de mêmes références aux différentes figures. Pour des raisons de clarté, seuls les étapes et éléments qui sont nécessaires à la compréhension de l'invention ont été représentés aux figures et seront décrits par la suite. En particulier, les mécanismes de fonctionnement d'une unité centrale n'ont pas été détaillés, l'invention étant compatible avec toute unité centrale usuelle. De plus, les mécanismes d'adressage proprement dits des mémoires contrôlées par l'invention n'ont pas été détaillés, l'invention étant là encore compatible avec les mémoires usuelles.

Le premier aspect sera décrit par la suite en relation avec un exemple d'application à une unité centrale de traitement sur laquelle s'exécute un système d'exploitation ainsi que diverses applications (programmes) auxquelles on souhaite réserver une zone mémoire particulière. Il s'applique toutefois plus généralement à toute unité d'exécution d'un ou plusieurs programmes faisant appel à une ou plusieurs mémoires pour laquelle on souhaite s'assurer qu'un programme donné ne fait appel qu'à des données ou instructions en mémoire qui lui sont autorisées. Par programme, on entend toute séquence d'instructions exécutable quelles qu'en soient la taille et la destination. On fera par la suite référence indifféremment au terme programme ou application. Par zone mémoire, on entend un ensemble de cellules mémoire adressables par un code numérique et représentant tout ou partie d'un ou plusieurs circuits de mémoire exploités par l'unité de traitement.

Les raisons pour lesquelles on peut souhaiter contrôler les zones d'une mémoire à laquelle accède une application sont multiples. Par exemple, si l'application manipule des données que l'on souhaite empêcher une autre application s'exécutant sur la même unité de traitement d'utiliser (par exemple des clés secrètes utilisées en cryptographie). Un autre exemple concerne une application (par exemple téléchargée) à laquelle on ne fait pas confiance et dont on souhaite éviter qu'elle "espionne" d'autres applications ayant accès aux mêmes mémoires physiques.

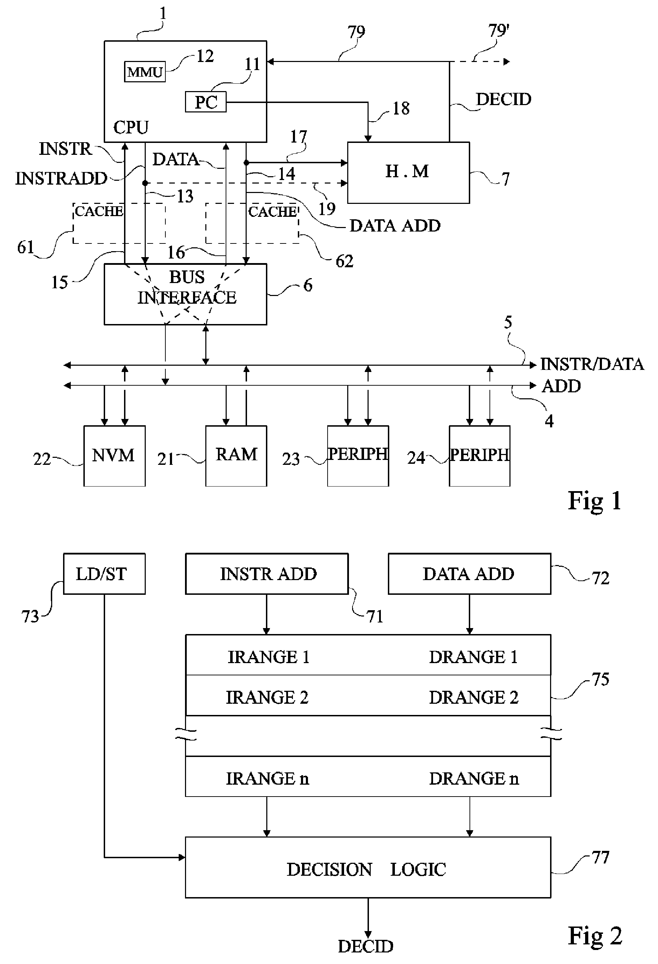

La figure 1 est un schéma-bloc d'un exemple de système selon un mode de réalisation de la présente invention. Un processeur ou unité 1 d'exécution de programmes (par exemple, une unité centrale de traitement - CPU) exploite divers périphériques 2 partageant des bus d'adresses 4 (ADD) et de données 5 (INSTR/DATA). Dans l'exemple représenté, une mémoire volatile 21 (RAM) et une mémoire non volatile 22 (NVM) sont connectées aux bus 4 et 5 ainsi que deux autres périphériques 23 et 24 (PERIPH), par exemple, un écran, un clavier, un autre processeur, etc. Des liaisons directes (par exemple, de signaux de commandes ou de contrôle d'état) non représentées entre l'unité 1 et certains périphériques peuvent également exister. La mémoire 21 est par exemple la mémoire d'exécution utilisée par l'unité 1, c'est-à-dire la mémoire dans laquelle sont chargés les programmes lorsqu'ils sont exécutés. La mémoire 22 est par exemple la mémoire de masse utilisée par l'unité 1, c'est-à-dire la mémoire dans laquelle sont stockés les programmes lorsqu'ils ne sont pas en cours d'exécution. Des données sont bien entendu également stockées dans les mémoires 21 et 22.

Un circuit d'interface 6 (BUS INTERFACE) est intercalé entre l'unité centrale 1 et les bus 4 et 5. Ce circuit a un rôle d'interface entre l'unité 1 et les périphériques 2. L'unité 1 envoie des requêtes d'instructions et de données en fournissant des adresses d'instructions INSTR ADD (liaison 13) et de données DATA ADD (liaison 14) au circuit 6. Celui-ci combine ces requêtes pour présenter les adresses sur le bus d'adresses 4. Les données (qu'il s'agisse d'instructions INSTR ou de données DATA proprement dites) retournées par le périphérique concerné 22, 23, 23 ou 24 (les mémoires étant ici assimilées à des périphériques) sur le bus 5 sont identifiées par le contrôleur 6 qui les dispache entre les accès d'instructions (liaison 15) et de données (liaison 16) de l'unité 1. Les adresses fournies par l'unité 1 au circuit 6 sont des adresses physiques, le cas échéant obtenues à partir d'adresses virtuelles par une unité de conversion 12 (MMU) généralement contenue dans l'unité 1.

Un circuit de contrôle 7 (H.M. - Hardware Monitor) intercepte les adresses d'instructions INSTR ADD et de données DATA ADD. Il intercepte (liaison 17) les adresses de données entre l'unité 1 et le circuit 6. Pour ce qui est des adresses d'instructions, celles-ci lui sont soit directement fournies par le compteur programme 11 (liaison 18), soit il les intercepte (liaison 19 en pointillés) entre l'unité 1 et le contrôleur 6.

Le cas échéant des mémoires caches 61 et 62 (CACHE), représentées en pointillés, sont intercalées entre les accès de données (adresses et données) et d'instructions (adresses et instructions) et le circuit d'interface 6.

Le circuit 7 observe toutes les transactions d'adresses pour vérifier que certains programmes (par exemple, des algorithmes de cryptographie) ou que certaines données (par exemple, des clés secrètes ou des données de droits d'accès) ne sont accessibles que par des programmes déterminés. Le circuit 7 fournit au moins un signal (DECID) identifiant une éventuelle violation d'accès, par exemple, à l'unité 1 (liaison 79) ou à d'autres éléments de l'équipement informatique (liaison 79' en pointillés).

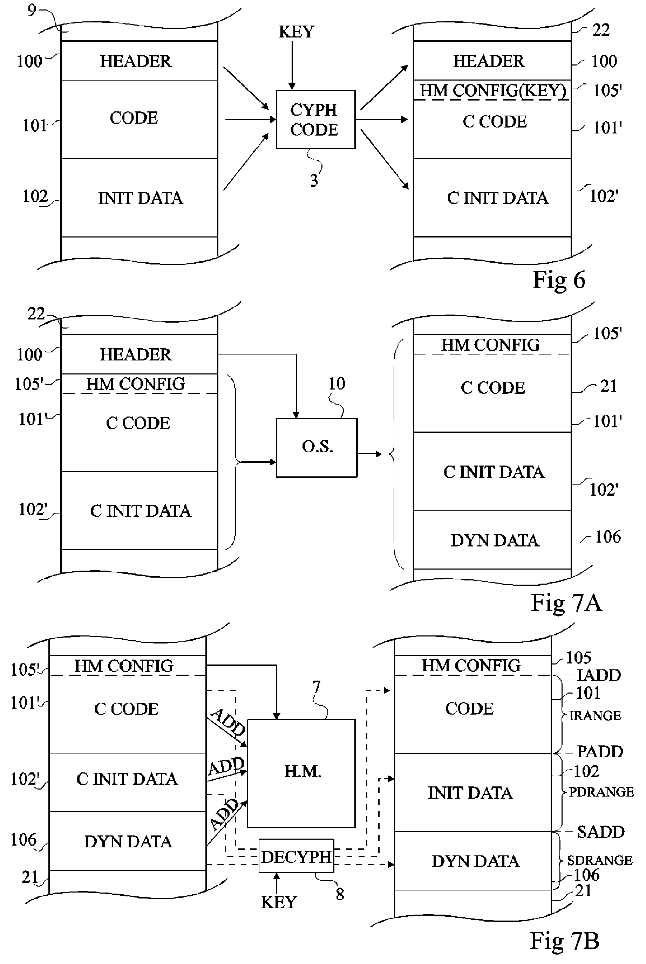

De préférence, tout ou partie du chargement des programmes dans la mémoire vive d'exécution dont l'accès est contrôlé par le dispositif 7, est effectué par un programme spécifique dit de confiance. Cela permet, par exemple, d'éviter qu'un système d'exploitation dit "ouvert" auquel on ne peut pas faire confiance puisse avoir accès à une partie critique de ce programme (clés, codes, etc.). Des exemples de chargement seront illustrés ultérieurement en relation avec le deuxième aspect de l'invention (figures 6 et suivantes).

Le premier aspect sera décrit par la suite en relation avec un exemple de contrôle d'accès à différentes zones d'une même mémoire volatile d'exécution de programmes, mais ces zones pourront appartenir à différentes mémoires volatiles ou non.

Du point de vue de l'organisation de la ou des mémoires contrôlées, un programme donné a par exemple accès à une ou plusieurs des catégories de zones ci-dessous :
une zone d'instructions qui représente son code exécutable ;
une zone de données privées (par exemple de clés de chiffrement ou d'accès), c'est-à-dire à laquelle seul ce programme doit pouvoir accéder ;
une zone de données dites réservées, destinée à contenir des données échangées entre le programme et le système d'exploitation (par exemple, des paramètres à des appels au système d'exploitation) ;
une zone dite de partage, destinée à contenir des données partagées par plusieurs programmes sans pour autant être forcément ouverte à toute application exécutée par l'unité centrale ;
une zone dite ouverte, c'est-à-dire non contrôlée.

Selon le domaine d'application de la présente invention, une ou plusieurs des catégories de zones ci-dessus peuvent être contrôlées par le circuit 7.

Par ailleurs, l'accès à certains périphériques (par exemple, un cryptoprocesseur, une mémoire non volatile, etc.) peut être réservé à une ou plusieurs applications.

La figure 2 est un schéma-bloc fonctionnel d'un mode de réalisation d'un circuit de contrôle d'accès 7 selon le premier aspect.

Ce circuit 7, de préférence externe à l'unité centrale de traitement 1, intercepte en fait chaque transaction qui se présente sur les bus d'adresses 14, et 13 ou 18. Le contrôle d'accès consiste à identifier le programme qui demande l'accès à la mémoire, par exemple à partir de l'adresse de l'instruction de lecture/écriture, pour déterminer ou vérifier la plage d'adresses IRANGE d'où provient cette instruction, et à vérifier que l'adresse de données DATA ADD appelée par cette instruction correspond à une plage d'adresses DRANGE à laquelle ce programme a accès.

De préférence, le dispositif 7 détecte qu'une instruction d'un programme en cours d'exécution est une instruction d'accès à la mémoire à surveiller (par exemple une instruction de lecture ou d'écriture). Il vérifie alors non seulement à partir de l'adresse de l'instruction (INSTR ADD) que celle-ci est issue d'une zone (IRANGE) de la mémoire correspondant au programme concerné mais également que l'adresse (DATA ADD) de la donnée à laquelle ce programme souhaite accéder fait également partie d'une plage d'adresses (DRANGE) autorisées.

Les adresses successives des instructions INSTR ADD du programme en cours d'exécution sont stockées dans un élément de mémorisation temporaire (par exemple, un registre 71) tandis que les adresses de données éventuelles DATA ADD appelées par l'instruction sont stockées dans un élément de mémorisation temporaire (par exemple, un registre 72). Dans l'exemple de la figure 2, on suppose que n plages d'adresses de données (DRANGE1 à DRANGEn) sont contrôlées à partir de n plages d'adresses d'instructions (IRANGE1 à IRANGEn). Bien entendu, plusieurs programmes peuvent avoir accès à des mêmes plages d'adresses et un même programme peut avoir plusieurs plages d'instructions.

Les plages d'adresses IRANGE et DRANGE autorisées (ou interdites) sont stockées dans des lignes d'une mémoire 75 pour établir une correspondance entre l'adresse courante contenue dans l'un des registres 71 et 72 et les plages d'adresses correspondantes autorisées. De préférence, la mémoire 75 est une mémoire dite associative, également appelée mémoire adressable par contenu (CAM - Content Addressable Memory). Une telle mémoire stocke une ou plusieurs tables de données ou de plages de données et recherche si une valeur d'entrée est contenue dans la ou les tables. Fonctionnellement, cela forme un moteur de recherche d'une valeur dans une ou plusieurs tables. La mémoire 75 fournit généralement l'adresse où elle a trouvé la correspondance ou un bit indicateur du fait qu'une correspondance a été trouvée entre la donnée d'entrée et une des valeurs stockées. Dans l'exemple de l'invention, les données d'entrées et les valeurs stockées correspondent à des adresses de la mémoire à accès contrôlé. Un exemple de structure d'une mémoire associative est décrit dans l'article "Content-Addressable Memory (CAM) Circuit and Architectures: A tutorial and Survey" de Kostas Pagiamtzis et Ali Sheikholeslami, paru en Mars 2006 dans IEEE Journal of Solid State Circuits, vol. 41, no. 3.

Les comparaisons (bits de correspondance fournis par la mémoire 75) entre les adresses courantes d'instructions et de données et les différentes plages sont préférentiellement exploitées par un circuit 77 en logique câblée (DECISION LOGIC) qui fournit, préférentiellement sous la forme d'un bit de décision DECID, l'indication d'une éventuelle violation d'une règle d'accès fixée par la logique de décision.

L'identification d'une lecture ou d'un chargement dans la ou les mémoires dont des zones sont contrôlées se traduit par un bit LD/ST stocké dans un élément de mémorisation (par exemple, un registre 73) qui active le circuit logique 77. Cette identification est effectuée, par exemple, par l'unité centrale 1 ou par un décodage de l'instruction en parallèle à celui effectué par l'unité 1.

De préférence, le circuit 7 (la mémoire 75) inclut au moins deux tables, une pour les plages d'adresses des instructions du programme à surveiller et une pour les plages d'adresses des données correspondantes. Le circuit 7 peut inclure plusieurs tables de données selon le type de données à surveiller (données réservées, partagées, interdites, etc.) ainsi que d'autres tables pour affiner les possibilités de contrôle (périphériques autorisés, type de données, etc.).

Le nombre n de lignes des tables de la mémoire 75 dépend du nombre maximum de programmes que le circuit peut surveiller en même temps.

Les tables du circuit 7 peuvent être renseignées de plusieurs façons.

Par exemple, un programme de configuration d'une ligne de la table est exécuté à la mise sous tension du dispositif contenant le système de l'invention. Dans ce cas, les programmes que l'on souhaite surveiller doivent être installés (par exemple, chargés en mémoire centrale d'exécution) avant que le système d'exploitation n'ait démarré.

Selon un autre exemple où les programmes sont installés après démarrage du système d'exploitation (ce qui est plus fréquent), un programme d'installation s'exécute en premier (au moins avant une application sensible) et s'attribue une des lignes de la table afin d'être protégé pour la suite de la session. Les autres programmes sont installés par ce programme d'installation qui, comme il est protégé, ne risque pas d'être détourné. Par installation d'un programme, on entend ici son chargement depuis une mémoire de masse (par exemple, le disque dur d'un ordinateur, un CDROM) vers une mémoire d'exécution (par exemple la RAM d'un ordinateur). Il ne s'agit pas de l'installation d'un logiciel depuis un CDROM vers un disque dur pour exécution ultérieure.

Selon un autre exemple, un processeur est dédié à l'installation (chargement) des programmes. Ce processeur est sécurisé en ce sens que les programmes d'installation qu'il exécute ne sont ni accessibles, ni modifiables.

Selon encore un autre exemple, l'unité centrale comporte un mode de fonctionnement supplémentaire par rapport à des niveaux utilisateur et superviseur, qui est dédié à la programmation du circuit 7. Ce troisième mode s'exécute alors depuis la mémoire morte non modifiable d'un système intégré (SoC - system on chip) incluant au moins l'unité centrale 1 et le circuit 7.

Selon encore un autre exemple qui sera décrit par la suite en relation avec les figures 6 et suivantes, les programmes sont chargés par un mécanisme utilisant un système d'exploitation sécurisé.

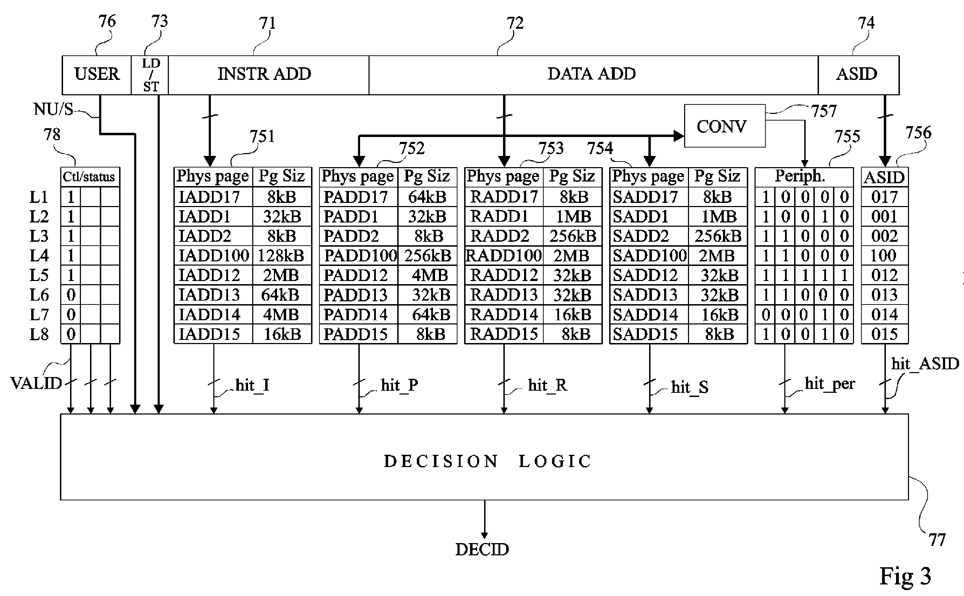

La figure 3 est un schéma-bloc plus détaillé d'un circuit 7 selon un mode de réalisation du premier aspect.

On suppose un circuit 7 de six tables 751 à 756 de huit lignes chacune contenant respectivement les plages d'adresses d'instructions, des plages d'adresses de données de trois catégories, des sélecteurs de périphériques autorisés, et un identifiant ASID (par exemple et arbitrairement 017, 001, 002, 100, 012, 013, 014 et 015) du programme exécuté. Par exemple, une première table 752 d'adresses de données identifie les adresses privées PADD des données accessibles uniquement lorsque le programme concerné s'exécute, une deuxième table 753 identifie les données réservées RADD échangées entre le programme et le système d'exploitation et une troisième table 754 identifie des données partagées SADD. L'identifiant du programme courant ASID est stocké dans un élément de mémorisation temporaire (par exemple, un registre 74). Cet identifiant sert, par exemple, à reconnaître quelles zones sont appelées par le système d'exploitation pour le compte du programme concerné. Par ailleurs, le circuit logique 77 tient également compte du mode de fonctionnement de l'unité centrale (par exemple du mode utilisateur USER par rapport au mode superviseur) en exploitant un bit USER stocké dans un élément de mémorisation (par exemple, un registre 76). Dans l'exemple représenté, le registre 76 fournit un bit NU/S actif en mode superviseur. Enfin, une table 78 de configuration du circuit 7 stocke, pour chaque ligne L1 à L8, des bits de commande ou de configuration (Ctl/status) conditionnant le fonctionnement du bloc logique 77. Par exemple, un des bits (VALID) active la ligne correspondante lorsque celle-ci est renseignée et désactive son interprétation dans le cas contraire. Un autre bit peut conditionner la règle d'interprétation d'une ou plusieurs lignes en configurant le bloc logique 77 comme cela sera mieux compris par la suite.

La ou les mémoires associatives utilisées fournissent, au bloc logique 77, au moins autant de bits de correspondance que les tables comportent de lignes, de préférence soit le même nombre soit le double de bits de correspondance. En d'autres termes, chaque table 751 à 756 fournit, pour chacune de ses lignes, au moins un bit hit1_I à hit8_I, hit1_P à hit8_P, hit1_R à hit8_R, hit1_S à hit8_S, hit1_per à hit8_per et hit1_ASID à hit8_ASID, indicateur du respect de la condition fixée par cette ligne. En variante, chaque table fournit deux bits de correspondance activés respectivement en cas de respect et de non respect de cette condition.

Dans l'exemple de la figure 3, les plages d'adresses sont identifiées par la page (Phys Page) de la mémoire à laquelle elles se réfèrent (en pratique, l'adresse de début IADD17, IADD1, IADD2, IADD100, IADD12, IADD13, IADD14, IADD15, PADD17, PADD1, PADD2, PADD100, PADD12, PADD13, PADD14, PADD15, RADD17, RADD1, RADD2, RADD100, RADD12, RADD13, RADD14, RADD15, SADD17, SADD1, SADD2, SADD100, SADD12, SADD13, SADD14 et SADD15) et par la taille (Pg Siz) en kilo-octets ou méga-octets de la zone depuis le début de cette page. Selon un autre exemple non représenté, les zones d'adresses sont définies par leurs adresses de début et de fin et l'exploitation de la table utilise un comparateur pour vérifier qu'une adresse courante est comprise entre les deux adresses extrêmes. Ce mode de réalisation requiert cependant deux lignes de la mémoire associative par zone de mémoire. Selon encore un autre exemple, la mémoire associative gère trois états possibles des bits, à savoir actif, inactif et indifférent (don't care), définissant alors, par les états indifférents, des plages d'adresses.

La table 755 de définition des périphériques (Periph.) a la forme d'une table de bits dans laquelle chaque colonne identifie un périphérique du système et les états respectifs des bits conditionnent l'accès selon que le périphérique appelant ou appelé est autorisé. Le périphérique courant est, de préférence, identifié à partir de l'adresse de données courante (DATA ADD). Par exemple, une table additionnelle 757 de conversion (CONV) contient les adresses réservées aux différents périphériques (qui sont généralement fixées lors de l'installation des périphériques ou à la conception de l'équipement informatique) et y associe un numéro de colonne de la table 755. La table 757 qui reçoit les adresses DATA ADD fournit alors un seul bit à la table 755. La table 757 est, par exemple, une autre table de mémoire associative ou est fonctionnellement obtenue par masquage de bits avec une logique combinatoire. En variante, la table 755 contient directement les plages d'adresses des périphériques.

La logique combinatoire (bloc 77) d'exploitation des résultats fournis par les tables de la mémoire associative définit en quelque sorte une ou plusieurs règles que le circuit de contrôle d'accès est chargé de vérifier pour indiquer une éventuelle violation par une application.

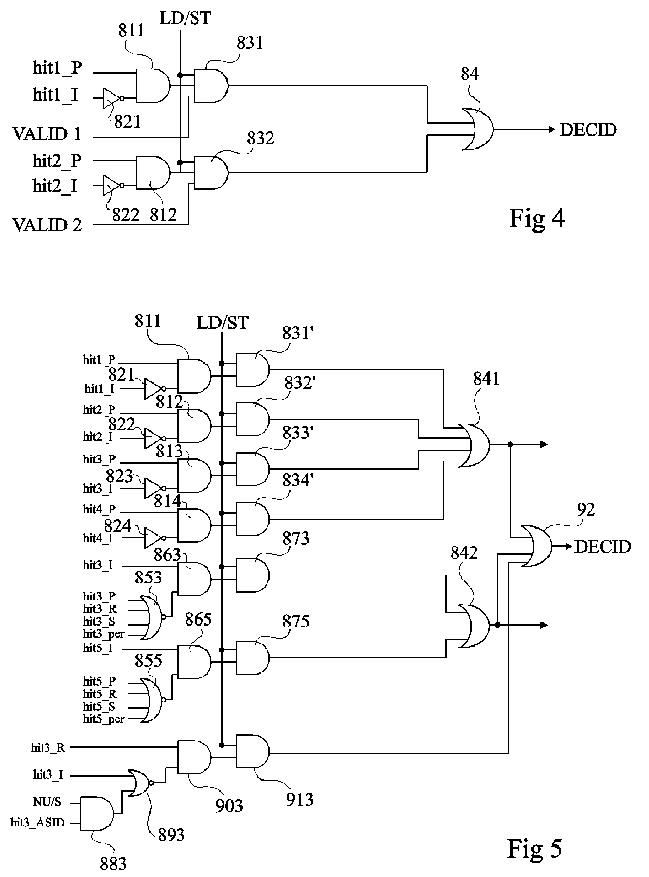

La figure 4 représente un exemple de logique combinatoire d'exploitation des résultats d'une mémoire associative d'un circuit 7.

Selon cet exemple, une seule règle est surveillée. Cette règle consiste à vérifier que seuls les deux premiers programmes 017 et 001 appellent leurs données privées respectives. La logique vérifie, pour chacune des deux premières lignes des tables 751 et 752 affectées aux deux premiers programmes que la règle est bien respectée, puis combine les deux résultats pour fournir le résultat de violation de sécurité. Pour cela, le bit de correspondance hit1_P de la première ligne de la table 752 est combiné par une porte 811 de type ET avec l'inverse (inverseur 821) du bit de correspondance hit1_I de la première ligne de la table 751. De même, le bit de correspondance hit2_P de la deuxième ligne de la table 752 est combiné par une porte 812 de type ET avec l'inverse (inverseur 822) du bit de correspondance hit1_I de la deuxième ligne de la table 751. Les sorties respectives des portes 811 et 812 sont combinées par des portes de type ET 831 et 832 à trois entrées dont des deuxièmes entrées reçoivent les bits VALID1 et VALID2 et dont des troisièmes entrées reçoivent le bit LD/ST indicateur d'une instruction de lecture ou d'écriture dans la mémoire surveillée. En supposant les bits actifs à l'état 1, la sortie de la porte 811 ou 812 n'est à l'état 1 que si l'adresse de données courante DATA ADD est dans la plage de données privées du programme concerné (bit hit1_P ou hit2_P à l'état 1) et que l'adresse d'instruction INSTR ADD n'est pas dans la plage des adresses d'instructions du programme concerné (bit hit1_I ou hit2_I à l'état 0). Une sortie de la porte 811 ou 812 à l'état 1 indique, sous réserve que la surveillance du programme concerné soit validée (bit VALID1 ou VALID2) à l'état 1 et que l'instruction soit une instruction d'accès à la mémoire (bit LD/ST à l'état 1), une violation de la règle d'accès. Cette violation est indiquée par un état 1 en sortie de la porte 831 ou 832. Les sorties respectives des portes 831 et 832 sont combinées par une porte 84 de type OU dont la sortie conditionne la décision DECID du bloc logique 77. L'utilisation de ce bit de décision peut être un blocage du système, le déclenchement d'une interruption de traitement d'erreur ou toute autre mesure adaptée à l'application.

En variante, les résultats individuels des règles sont fournis par la logique de décision 77 à des fins d'analyse plus fines des violations éventuelles. De préférence, cette analyse est complémentaire à un blocage, surtout s'il s'agit d'une règle d'accès à des données privées.

La logique combinatoire peut respecter une architecture identique pour toutes les lignes des tables et être programmable par des bits de configuration (table 78). Ces bits sont de préférence renseignés par le programme de chargement lors du chargement de chaque application. Dans l'exemple simplifié de la figure 4, le bit de configuration se résume à un bit de validation de la règle pour chaque application.

La figure 5 représente un autre exemple de logique combinatoire 77 d'exploitation des résultats de tables de mémoire associative d'un circuit 7.

On suppose l'existence de trois règles différentes appliquées à des groupes de programmes différents.

Une première règle (par exemple, l'accès à des données privées) est surveillée pour les quatre premiers programmes (les quatre premières lignes des tables). La logique reprend alors par exemple celle illustrée en figure 4 avec quatre portes ET 811 à 814 recevant respectivement les bits hit1_P à hit4_P et les inverses (inverseurs 821 à 824) des bits hit1_I à hit4_I, et quatre portes ET 831' à 834' combinant les résultats respectifs des portes 811 à 814 avec le bit LD/ST. Pour simplifier, on n'a pas tenu compte des bits de validation respectifs des différentes règles pour les différents programmes. Les sorties des portes 831' à 834' fournissent chacune un bit indicateur d'une violation de la première règle par les programmes 1 à 4 et ces quatre bits sont combinés par une porte OU 841 qui indique la violation éventuelle de la première règle par un quelconque des programmes 1 à 4.

Une deuxième règle vérifie, pour les troisième et cinquième programmes (lignes 3 et 5) que l'instruction courante cherche à accéder à une donnée qui lui est associée, pourvu que cette donnée soit dans une des zones de données privées, réservées ou partagées ou dans un des périphériques affectés. Deux portes de type NON OU à quatre entrées 853 et 855 reçoivent respectivement les bits hit3_P, hit3_R, hit3_S, hit3_per et hit5_P, hit5_R, hit5_S, hit5_per. Les sorties respectives des portes 853 et 855 sont combinées par des portes de type ET 863 et 865 avec les bits hit3_I et hit5_I, dont les sorties respectives sont combinées par des portes de type ET 873 et 875 avec le bit LD/ST. Les sorties des portes 873 et 875 fournissent respectivement un bit indicateur d'une violation de la deuxième règle par les programmes 3 et 5 et ces deux bits sont combinés par une porte de type OU 842 qui indique la violation éventuelle de la deuxième règle par un quelconque des programmes 3 et 5.

Une troisième règle vérifie que les données réservées au troisième programme sont appelées soit par le système d'exploitation alors qu'il est en mode superviseur et agit pour le compte du programme 3, soit à partir de la zone d'instructions du troisième programme. Une porte de type ET 883 combine les bits hit3_ASID et NU/S. Sa sortie est combinée par une porte de type NON OU 893 avec le bit hit3_I et la sortie de la porte 893 est combinée par une porte de type ET 903 avec le bit hit3_R. La sortie de la porte 903 est combinée avec le bit LD/ST par une porte de type ET 913 dont la sortie fournit un bit indicateur d'une violation de la troisième règle. En prenant l'exemple de remplissage de la mémoire associative de la figure 3, les cinq programmes surveillés correspondent aux programmes numéros 017, 001, 002, 100 et 012 qui se partagent l'unité d'exécution. Les trois programmes 013, 014 et 015 ne sont pas pris en compte (bits VALID des lignes L6 à L8 à l'état 0).

Une porte de type OU 92 combine les sorties respectives des portes 841, 842 et 913 pour fournir le bit DECID indicateur d'une violation d'une des règles surveillées.

Là encore, il est possible de respecter une architecture similaire pour chaque ligne selon les règles à appliquer. En particulier, chacun des huit programmes peut être surveillé du point de vue de chacune des règles en utilisant des bits de validation et de configuration (table 78) à partir d'un circuit logique ayant huit groupes de portes 82i, 81i, 83i (i allant de 1 à 8) pour la première règle, huit groupes de portes 85i, 86i et 87i pour la deuxième règle et huit groupes de portes 88i, 89i, 90i et 91i pour la troisième règle, les résultats étant combinés par des portes de type OU à huit entrées 841, 842 pour les deux premières règles et 843 (non représentées) pour la troisième règle.

D'autres logiques combinatoires peuvent être prévues en respectant tout ou partie des fonctionnalités décrites, et en effectuant un compromis entre la souplesse et la versatilité souhaitée pour le circuit de contrôle d'accès et la complexité de sa structure et de sa programmation.

Dans un mode de réalisation simplifié, le circuit 7 ne comporte qu'une seule ligne. A chaque changement de tâche, le circuit 7 est alors paramétré selon l'application à exécuter. La commutation entre deux applications risque d'être un peu plus lente en raison de ce besoin de paramétrage qui requiert un passage dans un mode plus sécurisé. Cependant, la structure et la consommation du circuit de contrôle d'accès sont plus simples.

Un avantage du circuit 7 est qu'il permet de contrôler l'accès à des données chargées dans une mémoire d'exécution d'un processeur, sans prendre de ressources au système d'exploitation et de façon transparente pour l'exécution.

Un autre avantage est qu'il est compatible avec différents modes de configuration selon, par exemple, le système dans lequel il doit être implanté, le niveau de sécurité requis, les capacités de programmation, etc.

Bien que le premier aspect ait été décrit en relation avec un exemple d'instructions de chargement (LOAD) et de stockage (STORE) de données, il s'applique plus généralement à toute instruction d'accès à des données dans la mémoire à contrôler (par exemple, des instructions d'effacement - ERASE, DELETE, etc.) et quelle que soit la désignation de ces instructions (par exemple, READ, WRITE, etc.).

Les figures 6, 7A et 7B illustrent un mode de mise en oeuvre du deuxième aspect pour un paramétrage d'un circuit de contrôle d'accès à des zones d'une mémoire d'exécution 21, par exemple, le circuit de contrôle d'accès 7 du premier aspect.

La figure 6 illustre partiellement deux mémoires 9 et 22, par exemple la mémoire d'un système externe et la mémoire masse 22 de l'équipement informatique par exemple du type de celui représenté en figure 1 lors d'un codage d'un programme pour qu'il soit à même d'être exécuté dans le système informatique. Le cas échéant, cette opération s'effectue vers un autre support que la mémoire 22 et le programme codé est transféré vers la mémoire de masse 22 dans une opération appelée installation qui consiste à transférer le programme depuis un support, par exemple un CDROM ou un serveur distant (par exemple via l'Internet), vers la mémoire de masse 22 (par exemple un disque dur ou une mémoire EPROM) associée à l'unité d'exécution 1.

Typiquement, un programme ou une application comporte au moins trois parties contenant respectivement des données d'en-tête 100 (HEADER) contenant des informations nécessaires au système d'exploitation de l'unité de traitement 1 pour charger le code programme 101 (CODE), c'est-à-dire les lignes d'instructions du programme et des données d'initialisation 102 (INIT DATA).

Selon ce mode de réalisation, dans un environnement externe de confiance (par exemple l'opérateur fournissant l'équipement à l'utilisateur, le fabricant de l'équipement, etc.), un système informatique met en oeuvre une fonction de codage chiffré (bloc 3, CYPH CODE) du code programme 101 et des données d'initialisation 102 pour leur transfert vers la mémoire 22. Le programme est donc fourni à la mémoire 22 chiffré avec une partie des données de configuration du circuit de contrôle d'accès. Cela requiert que l'architecture du circuit de contrôle 7 soit connue par l'outil de codage pour qu'il puisse générer des données de configuration HM CONFIG.

La fonction 3 utilise une clé KEY de chiffrement pour chiffrer les informations transférées à l'exception des données d'en-tête (partie 100) et génère des informations (partie 105, HM CONFIG) de configuration du circuit de contrôle 7 qui seront ensuite utilisées à chaque chargement du programme pour exécution. Ces informations contiennent, entre autres, des instructions programme et des données (code d'amorçage). Les informations de configuration HM CONFIG ne sont pas chiffrées mais contiennent une signature cryptographique de manière à ce que leur intégrité et leur authenticité puissent être vérifiées lors de la configuration du circuit de contrôle 7. A ce stade, seules les données d'entête (incluant l'adresse du point d'entrée dans le programme) et le code de configuration HM_CONFIG sont interprétables sans déchiffrement par le système d'exploitation.

En variante, la fonction 3 est assurée par le système d'exploitation dans un mode de fonctionnement particulier (par exemple, superviseur) ou fait appel à un processeur annexe.

Lors du chargement (figure 7A) du programme en mémoire d'exécution 21 de l'unité 1, le système d'exploitation (symbolisé par un bloc 10 - O.S.) lit les données d'en-tête 100 non chiffrées, ce qui lui permet de transférer les informations des autres parties 105', 101' et 102' dans une ou plusieurs parties de la mémoire d'exécution 21. De plus, l'en-tête contient généralement des informations permettant au système d'exploitation de définir une ou plusieurs parties 106 destinées à recevoir des données dynamiques exploitées pendant l'exécution du programme. En fait, le programme chiffré est chargé par le système d'exploitation comme toute application normale. Pour simplifier, on ne considère que deux parties INIT DATA et DYN DATA sans préciser s'il s'agit de données privées, réservées ou partagées. La classification de ces données dépend du programme et du domaine d'application et sera bien entendu si besoin prise en compte pour la configuration du circuit 7.

La figure 7B illustre le fonctionnement du système lors d'une première exécution du programme présent dans la mémoire d'exécution 21.

L'exécution débute par les instructions de la partie 105' de configuration du circuit de contrôle. Ces instructions contiennent un appel à un sous-programme spécifique pour extraire, à l'aide du système d'exploitation, des informations sur le programme (entre autres, les adresses physiques) et les fournir à un agent de confiance de l'équipement (coprocesseur de sécurité, mode sécurisé, etc.) utilisant la clé KEY et autres informations pour vérifier l'intégrité et l'authenticité de la partie 105', déchiffrer (bloc 8, DECYPH) les informations des parties 101' et 102' et remplacer le contenu chiffré par le contenu en clair, en ayant configuré le circuit de contrôle 7 (H.M.) qui empêchera tout appel par un programme non autorisé. Les adresses ADD des informations des parties 101', 102' et 106 servent à renseigner les tables de la mémoire associative 75 du circuit 7 et les informations de configuration 105' permettent de fixer les autres conditions (périphériques associés, paramétrage de la logique 77 pour le programme concerné, etc.). A la fin de cette étape, le programme et ses données se retrouvent en clair dans la mémoire 21 (parties 101, 102, 106).

Tant que le programme reste dans la mémoire 21 et que son accès est contrôlé par le circuit 7, le fonctionnement est tel qu'expliqué précédemment en relation avec les figures 1 à 5.

Selon que la mémoire d'exécution 21 est ou non accessible uniquement par l'unité 1, il peut être utile de pouvoir libérer cette mémoire pour un autre programme. C'est pourquoi, les informations de configuration sont de préférence conservées dans la mémoire 21 après le chargement de façon à pouvoir ultérieurement chiffrer de nouveau les parties sensibles avant de libérer le circuit de contrôle. Un déchiffrement ultérieur est alors requis à chaque chargement du programme concerné.

Bien que le mode de mise en oeuvre de la figure 6 ait été décrit en relation avec le circuit de contrôle d'accès des figures 2 à 5, il s'applique également à la configuration d'autres circuits de contrôle d'accès configurables, par exemple le circuit décrit dans la demande de brevet US-A-2005/0028004 susmentionnée. Dans ce dernier cas, seules les zones d'instructions seront contrôlées.

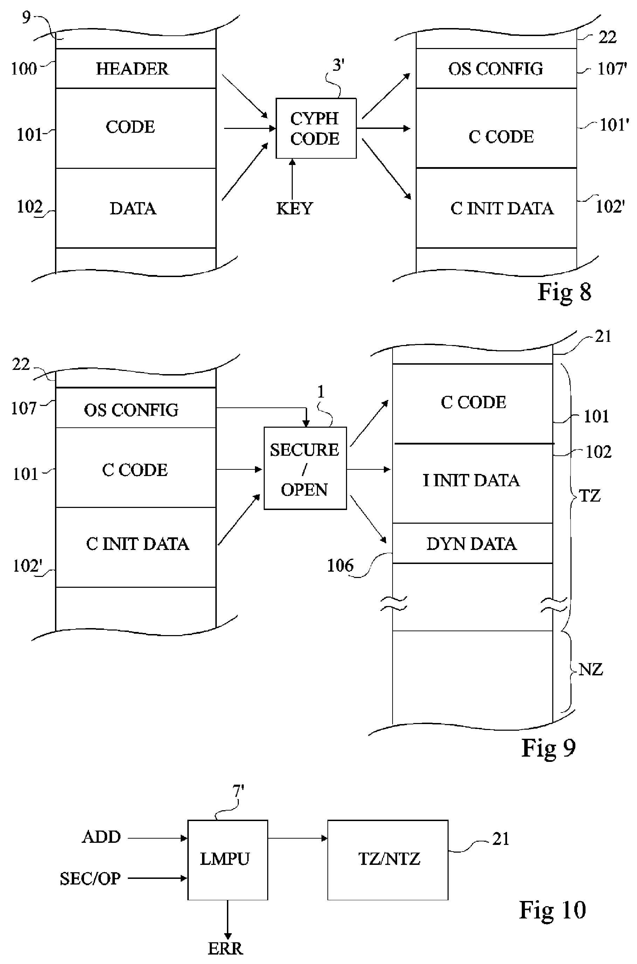

La figure 8 illustre un autre mode de mise en oeuvre du procédé de chargement de programme selon le deuxième aspect. Ce mode de mise en oeuvre est plus particulièrement destiné à un système pourvu d'au moins deux modes de fonctionnement de son système d'exploitation (par exemple, sécurisé SECURE et ouvert OPEN) et à des mémoires d'exécution pourvues d'un contrôleur d'accès à des zones spécifiques.

Comme pour le premier mode de mise en oeuvre (figure 6), le codage du programme dans une mémoire non volatile 22 du système, que ce soit depuis une autre mémoire non volatile 22 ou depuis un système distant, s'accompagne d'un chiffrement (bloc 3', CYPH CODE) des parties 101 et 102 contenant le code programme et des données d'initialisation. Ici, la génération d'informations chiffrées de configuration du circuit de contrôle associé à l'unité de traitement est remplacée par des informations chiffrées (partie 107') de configuration des contrôleurs mémoire. Le chiffrement est effectué, par exemple, par une partie sécurisée du système d'exploitation ou avant d'être introduit dans le système.

La figure 9 illustre le fonctionnement de ce mode de mise en oeuvre lors du premier chargement en mémoire d'exécution du programme stocké dans la mémoire 22. Les informations de configuration 107' contiennent une instruction d'appel au système d'exploitation sécurisé (SECURE). Une fois que le processeur 1 a basculé en mode sécurisé, il est capable de déchiffrer les informations de configuration OS CONFIG, le code programme CODE et les données d'initialisation INIT DATA. Les informations de configuration servent à définir des zones mémoire affectées à ce programme dans des zones considérées comme sécurisées TZ d'une mémoire d'exécution 21 du système contenant le cas échéant des zones non sécurisées NTZ. Les zones sécurisées ne sont accessibles que lorsque l'unité de traitement fonctionne sous son système d'exploitation sécurisé. De préférence, les zones sécurisées font partie de zones qui ne sont pas susceptibles d'être transférées vers des zones temporaires d'une mémoire de masse (par exemple, des zones temporaires d'un disque dur) destinées à augmenter virtuellement la mémoire d'exécution.

La figure 10 illustre un exemple de mise en oeuvre du système des figures 8 et 9 lors de l'exécution des programmes. A chaque fois qu'une adresse ADD est présente sur un bus mémoire (4, 5, figure 1), cette adresse est filtrée par un circuit 7' (LMPU) de contrôle d'accès aux zones sécurisées. Le circuit 7' est, par exemple, un circuit connu sous les dénominations Local Memory Protection Unit ou pare-feu (par exemple, connu sous la dénomination commerciale Trust Zone Memory Access - TZMA) qui s'assure, pour les adresses faisant partie d'une plage définie, que l'unité 1 est en mode sécurisé (bit SEC/OP). Dans l'affirmative, l'adresse est transférée à la mémoire 21 pour extraction de l'instruction ou donnée. Sinon, elle est bloquée par ce circuit qui, de préférence, fournit par ailleurs un bit (ERR) informant d'une tentative de violation d'accès. Par rapport à l'architecture de la figure 1, un tel circuit se trouve, par exemple, entre les bus 4 et 5 et la mémoire 21. En variante, le circuit 7' correspond à un mode de réalisation simplifié du circuit de contrôle d'accès des figures 1 à 5 se contentant de vérifier, à l'aide d'une mémoire associative, si l'adresse courante requiert le système d'exploitation sécurisé pour bloquer ou non l'accès à l'adresse.

Un avantage du deuxième aspect de l'invention est qu'il ne nécessite pas de modifier le système d'exploitation sécurisé pour traiter un nouveau programme.

Un exemple d'application de la présente invention concerne les terminaux de gestion de droits d'accès à des contenus numériques (par exemple des terminaux connus sous la dénomination SetTopBox).

Un autre exemple d'application de la présente invention concerne les consoles ou ordinateurs susceptibles de télécharger d'autres applications (par exemple des jeux) sur un réseau de communication (par exemple, Internet).

Bien entendu, la présente invention est susceptible de diverses variantes et modifications qui apparaîtront à l'homme de l'art. En particulier, bien qu'elle ait été décrite en relation avec une seule mémoire dont des zones sont à protéger, elle s'applique plus généralement quel que soit le nombre de mémoires dans lesquelles se trouvent les données d'accès contrôlé. De plus, bien que l'invention ait été décrite en relation avec une architecture, dite Harvard, ayant deux bus séparés 4 et 5 pour les instructions et les données, elle s'applique également à une architecture, dite Von Neuman à un bus commun pour instructions et données. Il suffit que l'unité de traitement 1 fournisse au circuit de contrôle d'accès 7 un signal indiquant si la requête d'accès concerne une instruction ou une donnée.

## Revendications

1. Procédé de chargement d'un programme, contenu dans au moins une première mémoire (21, 22), dans une deuxième mémoire (21) accessible par une unité d'exécution (1), **caractérisé en ce que** :
la première mémoire contient des instructions du programme (CODE) et au moins des données d'initialisation (INIT DATA) du programme sous une forme chiffrée, et des informations (HM CONFIG, OS CONFIG) de configuration du programme sous une forme non chiffrée mais contenant une signature cryptographique ;
un circuit (7, 7') de contrôle d'accès à ladite deuxième mémoire est configuré à partir desdites informations ; et
lesdites instructions et données d'initialisation sont :
- lues dans la première mémoire et déchiffrées, puis,
- stockées non chiffrées dans ladite deuxième mémoire.

2. Procédé selon la revendication 1, dans lequel le programme chiffré contenu dans la première mémoire (21, 22) a été transféré dans cette mémoire depuis une troisième mémoire (22).

3. Procédé selon la revendication 2, dans lequel les première et deuxième mémoires sont une même mémoire volatile (21).

4. Procédé selon l'une quelconque des revendications 1 à 3, dans lequel l'unité d'exécution (1) comporte au moins deux modes (SECURE, OPEN) de fonctionnement, le chargement étant effectué par un premier mode (OPEN), une première exécution dans ce premier mode faisant appel à un deuxième mode (SECURE).

5. Procédé selon l'une quelconque des revendications 1 à 3, dans lequel l'unité d'exécution (1) comporte au moins deux modes (SECURE, OPEN) de fonctionnement, le chargement et l'exécution étant effectués par un premier mode (SECURE).

6. Procédé de protection d'un programme, chargé pour exécution conformément au procédé selon l'une quelconque des revendications 1 à 5, dans lequel le circuit de contrôle d'accès (7) surveille un bus d'adresses et vérifie que l'adresse présente sur le bus est comprise dans une plage d'adresses.

7. Procédé de protection d'un programme, chargé pour exécution conformément au procédé selon l'une quelconque des revendications 1 à 5, dans lequel le circuit de contrôle d'accès (7') surveille un bus d'adresses et n'autorise l'accès à la deuxième mémoire que si l'unité d'exécution (1) est placée dans un mode de fonctionnement parmi plusieurs modes.

8. Système informatique comportant des moyens pour la mise en oeuvre du procédé selon l'une quelconque des revendications 1 à 7.

## Patentansprüche

1. Verfahren zum Laden eines Programms, das zumindest in einem ersten Speicher (21, 22) enthalten ist, in einen zweiten Speicher (21), auf dem durch eine Ausführungseinheit (1) zugegriffen werden kann, **dadurch gekennzeichnet, dass**
der erste Speicher Programmanweisungen (CODE) und zumindest Initialisierungsdaten (INIT DATA) des Programms in verschlüsselter Form und Konfigurationsinformationen (HM CONFIG; OS CONFIG) des Programms in unverschlüsselter Form, die jedoch eine kryptographische Signatur enthalten, enthält;
eine Schaltung (7, 7') zum Steuern des Zugriffs auf den zweiten Speicher aus den Informationen konfiguriert wird; und
die Anweisungen und Initialisierungsdaten
- aus dem ersten Speicher gelesen werden und dechiffriert werden, und
- unverschlüsselt im zweiten Speicher gespeichert werden.

2. Verfahren nach Anspruch 1, wobei das verschlüsselte Programm, das im ersten Speicher (21, 22) enthalten ist, aus einem dritten Speicher (22) in diesen Speicher übertragen worden ist.

3. Verfahren nach Anspruch 2, wobei die ersten und zweiten Speicher ein gleicher flüchtiger Speicher (21) sind.

4. Verfahren nach einem der Ansprüche 1 bis 3. wobei die Ausführungseinheit (1) zumindest zwei Betriebsmodi (SECURE; OPEN) aufweist, wobei der Ladevorgang durch einen ersten Modus (OPEN) ausgeführt wird, wobei eine erste Ausführung in diesem ersten Modus einen zweiten Modus (SECURE) verwendet.

5. Verfahren nach einem der Ansprüche 1 bis 3. wobei die Ausführungseinheit (1) zumindest zwei Betriebsmodi (SECURE; OPEN) aufweist, wobei der Ladevorgang und die Ausführung durch einen ersten Modus (SECURE) ausgeführt werden.

6. Verfahren zum Schützen eines Programms, das gemäß einem der Ansprüche 1 bis 5 zur Ausführung geladen wurde, wobei die Zugriffsteuerschaltung (7) einen Adressbus überwacht und überprüft, dass die auf den Bus vorhandene Adresse in einem Bereich von Adressen enthalten ist.

7. Verfahren zum Schützen eines Programms, das gemäß einem der Ansprüche 1 bis 5 zur Ausführung geladen wurde, wobei die Zugriffsteuerschaltung (7') einen Adressbus überwacht und nur Zugriff auf den zweiten Speicher autorisiert, wenn die Ausführungseinheit (1) in einen Betriebsmodus aus mehreren Modi gesetzt ist.

8. Computersystem, welches Mittel zum Ausführen des Verfahrens nach einem der Ansprüche 1 bis 7 aufweist.

## Claims

1. A method for loading a program, contained in at least a first memory (21, 22), into a second memory (21) accessible by an execution unit (1), **characterized in that**:
the first memory contains program instructions (CODE) and at least initialization data (INIT DATA) of the program in a cyphered form, and configuration information (HM CONFIG, OS CONFIG) of the program in a uncyphered form but containing a cryptographic signature;
a circuit (7, 7') for controlling the access to said second memory is configured from said information ; and
said instructions and initialization data are:
- read from the first memory and deciphered, and
- stored uncyphered in said second memory

2. The method of claim 1, wherein the cyphered program contained in the first memory (21, 22) has been transferred into this memory from a third memory (22).

3. The method of claim 2, wherein the first and second memories are a same volatile memory (21).

4. The method of any of claims 1 to 3, wherein the execution unit (1) comprises at least two operating modes (SECURE, OPEN), the loading being performed by a first mode (OPEN), a first execution in this first mode using a second mode (SECURE).

5. The method of any of claims 1 to 3, wherein the execution unit (1) comprises at least two operating modes (SECURE, OPEN), the loading and the execution being performed by a first mode (SECURE).

6. A method for protecting a program, loaded to be executed according to the method of any of claims 1 to 5, wherein the access control circuit (7) monitors an address bus and verifies that the address present on the bus is comprised within a range of addresses.

7. A method for protecting a program loaded to be executed according to the method of any of claims 1 to 5, wherein the access control circuit (7') monitors an address bus and only authorizes access to the second memory if the execution unit (1) is placed in a operating mode from among several modes.

8. A computer system comprising means for implementing the method of any of claims 1 to 7.
